# EUROPÄISCHE PATENTSCHRIFT

(11) **EP 1 838 204 B1**
(45) Veröffentlichungstag und Bekanntmachung des Hinweises auf die Patenterteilung: **21.03.2012**
(21) Anmeldenummer: 05811030.5
(22) Anmeldetag: 25.10.2005
(51) Int. Cl.: A47L 15/48, A47L 15/42

(54) **GESCHIRRSPÜLMASCHINE MIT EINER TROCKNUNGSVORRICHTUNG**
DISHWASHER PROVIDED WITH A DRYING DEVICE
LAVE-VAISSELLE COMPRENANT UN DISPOSITIF DE SECHAGE

(30) Priorität: 27.12.2004 DE 102004062749; 16.03.2005 DE 102005012113
(43) Veröffentlichungstag der Anmeldung: 03.10.2007
(73) Patentinhaber: BSH Bosch und Siemens Hausgeräte GmbH, 81739 München (DE)
(72) Erfinder: PAINTNER, Kai, 86477 Adelsried (DE)
(86) Internationale Anmeldenummer: PCT/EP2005/055496
(87) Internationale Veröffentlichungsnummer: WO 2006/069834

(56) Entgegenhaltungen:
- CH-A- 690 354
- DE-A1- 3 741 652
- DE-A1- 10 024 892
- DE-A1- 10 259 737
- GB-A- 2 311 932
- US-A1- 2004 003 832

## Beschreibung

Die Erfindung betrifft eine Geschirrspülmaschine mit einem Spülbehälter, an dem an mindestens einer Seitenwand ein erster Wärmetauscher mit einer Kondensationsfläche angeordnet ist, der zur Trocknung von feuchter Luft in einem Behandlungsraum dient.

Aus der Offenlegungsschrift DE 3741652 A1 ist eine Geschirrspülmaschine mit einem Spülbehälter und einem darin angeordneten Behandlungsraum bekannt, der eine Einlassöffnung und eine Auslassöffnung aufweist, denen ein Strömungskanal zugeordnet ist. In dem Strömungskanal sind ein als Wärmetauscher ausgebildeter Latentwärmespeicher, ein Gebläse und ein Heizelement angeordnet. Während eines Trocknungsvorgangs wird durch das Gebläse oder durch Eigenkonvektion feuchte Luft über die Einlassöffnung dem Strömungskanal zugeführt. Die feuchte Luft strömt durch den Wärmetauscher und wird am Latentwärmespeicher entfeuchtet. Die aus dem Latentwärmespeicher austretende Luft passiert das Heizelement, wo die entfeuchtete Luft aufgeheizt wird. Nach Passieren des Gebläses wird die ungesättigte Luft, deren Feuchtegehalt durch Kondensation im Wärmetauscher verringert wurde, in den Behandlungsraum zurückgeführt. Dort erwärmt die Luft sich weiter durch Kontakt mit dem während eines vorangegangenen Spülvorgangs noch erwärmten Einbauten im Spülbehälter und dem zu reinigenden Gut. Mit steigender Temperatur sinkt dabei die relative Feuchte der Luft. Dadurch kann die Luft wieder Feuchtigkeit aufnehmen, und der Kreislauf beginnt von vorne.
Nachteilig ist jedoch, dass der Wärmetauscher außerhalb des Behandlungsraums angeordnet ist und somit keinen Einfluss auf die Temperatur der Seitenwände des Spülbehälters hat. Dies hat zur Folge, dass der Wirkungsgrad des Trocknungsvorgangs schlecht ist und das zu reinigende Gut nach dem Betrieb noch feuchte Stellen aufweist.

Ferner ist aus dem Stand der Technik eine Geschirrspülmaschine bekannt, die an einer Seitenwand einen Wärmetauscher aufweist. Der aus einem Kunststoff hergestellte Wärmetauscher weist mindestens eine Seitenwand auf, die aus einer dünnen Folie ausgebildet ist. Der Wärmetauscher ist so angeordnet, dass die Folie auf die Seitenwand der Geschirrspülmaschine geklebt ist. Aufgrund der dünnen Folie ist ein verbesserter Wärmeaustausch zwischen Wärmeaustauscher und Behandlungsraum möglich, da die Wärmeleitfähigkeit der Folie relativ hoch ist. Nach dem Klarspülvorgang wird der Wärmetauscher mit Frischwasser befüllt, so dass sich an der Kontaktfläche im Inneren an der Seitenwand des Behandlungsraums eine Kondensationsfläche bildet, wo die feuchte Luft auskondensieren kann. Das an den Seitenwänden entstehende Kondensat fließt an den Seitenwänden ab in den Abfluss der Geschirrspülmaschine.
Nachteilig bei dieser Lösung ist jedoch, dass nach dem Betrieb das zu reinigende Gut immer noch feuchte Stellen aufweist, da der Wärmetauscher nicht ausreicht, um die gesamte feuchte Luft während des Trocknungsvorgangs zu entfeuchten.

Auch die US 2004/0003832 A zeigt eine solche flache Einbettung von Wärmetauschern in eine seitliche Wandung des Spülbehälters mit den o. g. Nachteilen.

Die CH 690 354 A5 zeigt einen extern vom Spülbehälter verlaufenden Strömungskanal für aus dem Spülbehälter abgesogene Luft. Dieser Strömungskanal steht an seiner dem Spülbehälter abgewandten Seite mit einem Wärmetauscher in thermischem Kontakt. Der Spülbehälter ist dadurch thermisch vom Spülbehälter durch den Strömungskanal getrennt. Zudem sind zur besseren Wärmeübertragung zwischen dem Strömungskanal und dem Wärmetauscher sogar noch zusätzliche Bauteile in Gestalt von Kühlrippen vorhanden, so daß die Fertigung aufwendig und die Anzahl der Bauteile hoch ist.

Der Erfindung liegt daher die Aufgabe zugrunde, eine Geschirrspülmaschine gemäß dem Oberbegriff des Anspruchs 1 mit einfachen konstruktiven Maßnahmen zu verbessern.

Die Erfindung löst dieses Problem durch eine Geschirrspülmaschine mit den Merkmalen des Anspruchs 1. Hinsichtlich weiterer vorteilhafter Ausgestaltungen wird auf die Ansprüche 2 bis 11 verwiesen.

Bei der erfindungsgemäßen Geschirrspülmaschine ist an mindestens einer Seitenwand des Spülbehälters ein erster Wärmetauscher mit einer Kondensationsfläche angeordnet, der zur Trocknung von feuchter Luft in einem Behandlungsraum dient. Dem ersten Wärmetauscher ist ein Strömungskanal zum Durchströmen feuchter Luft zugeordnet, der als integraler Bestandteil des ersten Wärmetauschers ausgebildet ist. Durch die erfindungsgemäße Anordnung wird der Trocknungsvorgang verbessert, da sich in dem Strömungskanal eine Kondensationsfläche durch den ersten Wärmetauscher bildet, der die feuchte Luft entfeuchtet. Ferner kann schon im vorhergehenden Klarspülvorgang die Temperatur herabgesetzt werden, da durch diese Anordnung der Trocknungsvorgang verbessert wird und niedrigere Temperaturen ausreichen, um das zu reinigende Gut zu trocknen. Darüber hinaus wirkt sich die niedrigere Temperatur in einem Klarspülvorgang schonend auf das zu reinigende Gut aus.

Nach einer bevorzugten Ausführungsform des Gegenstandes der Erfindung ist vorgesehen, dass mindestens eine Seitenwand des Strömungskanals als eine Seitenwand des ersten Wärmetauschers ausgebildet ist.
Diese Lösung bietet den Vorteil, dass sich die Taktzeiten an einer Fertigungslinie verkürzen, da nur ein Bauteil montiert wird. Ferner sind die Herstellungskosten gering, da nur ein Werkzeug zur Herstellung benötigt wird.

Nach dem Gegenstand der Erfindung ist vorgesehen, dass der erste Wärmetauscher als integraler Bestandteil des Strömungskanals ausgebildet ist.
Vorteilhafterweise kann durch diese Anordnung das Bauteil kostengünstiger hergestellt werden, da nur ein Werkzeug benötigt wird.

Nach einer vorteilhaften Ausgestaltung des Gegenstandes der Erfindung ist vorgesehen, dass der erste Wärmetauscher als ein Latentwärmespeicher ausgebildet ist.
Der wesentliche Vorteil dieser Lösung ist, dass der Latentwärmespeicher bei sehr geringer Temperaturdifferenz eine relativ große Wärme pro Speichervolumen aufnehmen und diese Energie über einen beliebigen Zeitraum verlustfrei speichert. Ein weiterer Vorteil besteht darin, dass die im Latentwärmespeicher gespeicherte Energie für den nächsten Spülvorgang verwendet wird.

Nach einer weiteren bevorzugten Ausführungsform des Gegenstandes der Erfindung ist vorgesehen, dass der Geschirrspülmaschine ein zweiter Wärmetauscher zugeordnet ist. Diese Lösung zeichnet sich besonders dadurch aus, dass durch den zweiten Wärmetauscher der Trocknungsvorgang verbessert wird, da der Geschirrspülmaschine eine weitere Kondensationsfläche zugeordnet ist, an der die feuchte Luft auskondensieren kann.

Nach einer vorteilhaften Weiterbildung des Gegenstandes der Erfindung ist vorgesehen, dass der zweite Wärmetauscher an mindestens einer Seitenwand des Spülbehälters angeordnet ist.
Durch diese Anordnung wird in vorteilhafter Weise der Trocknungsvorgang verbessert, da durch den Wärmetauscher, der mit kaltem Frischwasser nach einem Klarspülvorgang befüllt wird, die Temperatur der Seitenwand abgesenkt wird. Zusätzlich zu dem ersten Wärmetauscher, der der Luft Feuchtigkeit entzieht, kann nun an der Seitenwand des Behandlungsraums durch den zweiten Wärmetauscher die feuchte Luft ebenfalls auskondensieren. Durch den Einsatz des zweiten Wärmetauschers kann somit der Trocknungsvorgang zeitlich verkürzt werden.

Nach einer weiteren vorteilhaften Weiterbildung des Gegenstandes der Erfindung ist vorgesehen, dass mindestens eine Kondensationsfläche des zweiten Wärmetauschers an einer Seitenwand des Strömungskanals angeordnet ist.
Diese Lösung zeichnet sich besonders dadurch aus, dass sie kostengünstig in ihrer Herstellung ist.

Nach einer weiteren vorteilhaften Ausgestaltung des Gegenstandes der Erfindung ist vorgesehen, dass in dem Strömungskanal eine Ablaufvorrichtung für das Kondensat angeordnet ist.
Durch diese Anordnung wird verhindert, dass das Kondensat wieder zurück in den Spülbehälter läuft und den Feuchtegehalt der Luft steigert.

Nach einer weiteren vorteilhaften Ausführungsform des Gegenstandes der Erfindung ist vorgesehen, dass in dem Strömungskanal eine Heizung angeordnet ist.

Diese Lösung bietet den Vorteil, dass die Luft aufgeheizt wird und somit in der Lage ist, wieder Feuchtigkeit im Behandlungsraum aufzunehmen.

Nach einer weiteren bevorzugten Ausführungsform des Gegenstandes der Erfindung ist vorgesehen, dass in dem Strömungskanal ein Gebläse angeordnet ist.
Durch diese Maßnahme gelingt es, die feuchte Luft rasch aus dem Behandlungsraum in den Strömungskanal zu fördern. Der Volumenstrom wird durch das Gebläse erhöht, so dass zusätzlich zu der Eigenkonvektion die feuchte Luft dem Strömungskanal zugeführt wird.

Nach einer nächsten bevorzugten Ausführungsform ist vorgesehen, dass der Behandlungsraum eine Einlassöffnung und eine Auslassöffnung aufweist, die durch den Strömungskanal miteinander verbunden sind.
Durch diese Anordnung ist sichergestellt, dass die feuchte Luft aus dem Behandlungsraum in den Strömungskanal einströmen kann und den Strömungskanal über die Auslassöffnung wieder verlassen kann.

Die Erfindung ist in einer nachfolgenden Beschreibung anhand eines in der Zeichnung vereinfacht dargestellten Ausführungsbeispiels erläutert. Es zeigen:

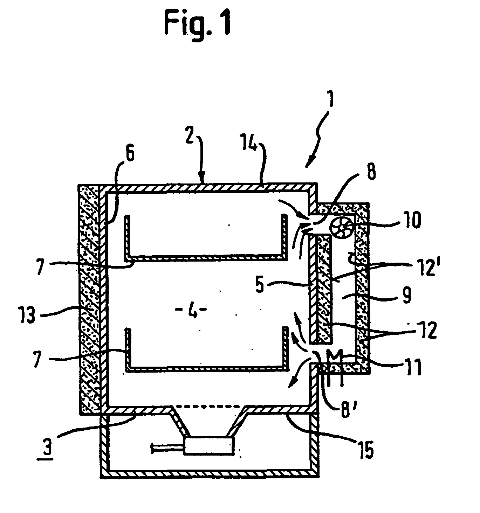

- Fig.1: eine in Schnittdarstellung von vorne schematisch dargestellte Geschirrspülmaschine, an deren Spülbehälter ein erster Wärmetauscher angeordnet ist, dem ein Strömungskanal zugeordnet ist und ein zweiter Wärmetauscher, der an einer weiteren Seitenwand des Spülbehälters angeordnet ist, und
- Fig. 2: die Geschirrspülmaschine ausschnittsweise in Schnittdarstellung von oben.

In der Figur ist eine erfindungsgemäße Geschirrspülmaschine 1 mit einem Spülbehälter 2 gezeigt, der einen aus Edelstahl, oder alternativ aus Kunststoff geformten Innenmantel 3 zur Auskleidung eines Behandlungsraumes 4 aufweist. Der Innenmantel weist an einer ersten Seitenwand 5 und an einer zweiten Seitenwand 6 nicht dargestellte Führungsschienen auf, an denen als Lagerungsbehälter 7 ausgebildete Geschirrkörbe ausziehbar gehalten sind. Die Lagerungsbehälter 7 dienen zur Aufbewahrung eines nicht gezeigten zu reinigenden Guts und werden von einer nicht dargestellten Sprühvorrichtung benetzt. Der Behandlungsraum 4 weist zwei Öffnungen 8,8' auf und zwar eine Einlassöffnung 8 und eine Auslassöffnung 8', die mittels eines Strömungskanals 9 miteinander verbunden sind. Durch die Einlassöffnung 8 wird mittels eines im Strömungskanal 9 angeordneten Gebläses 10 die sich während des Betriebes bildende feuchte Luft angesaugt. Das Gebläse 10 ist unmittelbar hinter der Einlassöffnung 8 angeordnet. Es kann aber auch durchaus zweckmäßig sein, das Gebläse 10 an einem anderen Ort des Strömungskanals 9 anzuordnen. Ferner ist im Strömungskanal 9 eine Heizung 11 angeordnet, die sich im Nahbereich der Auslassöffnung 8' befindet. Es kann durchaus sinnvoll sein, dass die Heizung 11 auch an einem anderen Ort im Strömungskanal 9 angeordnet ist. Des Weiteren ist im Strömungskanal 9 eine nicht gezeigte Ablaufvorrichtung angeordnet, die das im Strömungskanal 9 entstehende Kondensat in den Behandlungsraum 4 abführt.

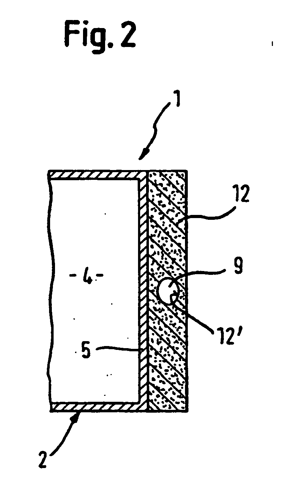

Um den Trocknungsvorgang zu verbessern, ist dem Strömungskanal 9 ein erster Wärmetauscher 12 mit einer Kondensationsfläche zugeordnet, der alternativ auch als ein Latentwärmespeicher ausgebildet sein kann. Der Strömungskanal 9 ist so angeordnet, dass er als ein integraler Bestandteil des ersten Wärmetauschers 12 ausgebildet ist (Fig.2). Um eine Kondensationsfläche im Behandlungsraum 4 zu bilden, ist der erste Wärmetauscher 12 an einer rechten Seitenwand 5 des Spülbehälters 2 angeordnet und an der Seitenwand 6 ein zweiter Wärmetauscher 13 angeordnet, der ebenfalls eine weitere Kondensationsfläche im Behandlungsraum 4 bildet. Es kann durchaus zweckmäßig sein, den zweiten Wärmetauscher 13 an einer nicht dargestellten Rückwand oder an einer Deckenwand 14 des Spülbehälters 2 anzuordnen. Auch ein zusätzlich dritter oder vierter Wärmetauscher könnte den Trocknungsvorgang verbessern, wenn diese an einer nicht gezeigten Rückwand, auf dem Top 14 oder unter einem Boden 15 des Spülbehälters 2 angeordnet sind.

Vorzugsweise sind die Wärmetauscher 12,13 aus Kunststoff ausgebildet. Nicht näher dargestellte Seitenwände des ersten Wärmetauschers 12 und des zweiten Wärmetauschers 13, die als Kontaktflächen zu anderen Bauteilen dienen, sind aus einer nicht gezeigten dünnen Kunststofffolie gebildet, wenn der erste Wärmetauscher 12 und der zweite Wärmetauscher 13 nicht als Latentwärmespeicher ausgebildet sind.

Die Geschirrspülmaschine 1 weist eine nicht gezeigte Steuer- und Regelungseinrichtung auf, die verschiedenen Betriebsprogramme, insbesondere das Programm Vorspülen - Reinigen - Zwischenspülen - Klarspülen - Trocknen speichert. Nach dem Klarspülvorgang beträgt die Temperatur im Behandlungsraum ca. 60°, da der Trocknungsvorgang durch den zweiten Wärmetauscher 13 verbessert wird und nicht mehr so hohe Temperaturen benötigt werden. Um nun der im Behandlungsraum 4 befindlichen feuchten Luft die Feuchtigkeit zu entziehen, wird nach dem Klarspülvorgang der erste Wärmetauscher 12 und der zweite Wärmetauscher 13 mit kaltem Frischwasser befüllt, so dass sich eine Kondensationsfläche an der Seitenwand 5 und an der Seitenwand 6 des Behandlungsraums 4 bildet. Die feuchte Luft kondensiert an der Seitenwand 5 und der Seitenwand 6 aus und das Kondensat fließt an diesen in einen nicht gezeigten Abfluss. Ebenfalls bildet sich unerwünschtes Kondensat am zu reinigenden Gut. Der Trocknungsvorgang wird verbessert, wenn ein Gebläse 10 die feuchte Luft durch die Einlassöffnung 8 ansaugt. Da der Strömungskanal 9 als integraler Bestandteil des ersten Wärmetauschers 12 ausgebildet ist, bildet sich ebenfalls Kondensat im Strömungskanal, welches durch die nicht gezeigte Ablaufvorrichtung abgeführt wird. Die entfeuchtete Luft strömt durch die im Strömungskanal 9 angeordnete Heizung 10, wo die entfeuchtete Luft erhitzt wird, um wieder Feuchtigkeit aufzunehmen. Trockne und heiße Luft gelangt über die Auslassöffnung 8' wieder zurück in den Behandlungsraum 4, wo sie die Feuchtigkeit, die an dem zu reinigenden Gut und im Behandlungsraum 4 angeordnet ist, wieder aufnehmen kann. Der Kreislauf beginnt nun wieder von vorne, da durch die Einlassöffnung 8 mittels des Gebläses 10 die feuchte, gesättigte Luft wieder angesaugt wird.

## Patentansprüche

1. Geschirrspülmaschine (1) mit einem Spülbehälter (2), an dem an mindestens einer Seitenwand (5,6) ein erster Wärmetauscher mit einer Kondensationsfläche angeordnet ist, der zur Trocknung von feuchter Luft in einem Behandlungsraum (4) dient, **dadurch gekennzeichnet, dass** dem ersten Wärmetauscher (12) ein Strömungskanal (9) zum Durchströmen feuchter Luft zugeordnet ist, wobei der Strömungskanal (9) als integraler Bestandteil des Wärmetauschers (12) ausgebildet ist und dieser an der Seitenwand (5) des Spülbehälters (2) angeordnet ist

2. Geschirrspülmaschine (1) nach Anspruch 1, **dadurch gekennzeichnet, dass** mindestens eine Seitenwand (12') des Strömungskanals (9) als eine Seitenwand des ersten Wärmetauschers ausgebildet ist.

3. Geschirrspülmaschine (1) nach einem der Ansprüche 1 oder 2, **dadurch gekennzeichnet, dass** der erste Wärmetauscher (12) als ein Latentwärmespeicher ausgebildet ist.

4. Geschirrspülmaschine (1) nach einem der Ansprüche 1 bis 3, **dadurch gekennzeichnet, dass** der Geschirrspülmaschine (1) ein zweiter Wärmetauscher (13) zugeordnet ist.

5. Geschirrspülmaschine (1) nach Anspruch 4, **dadurch gekennzeichnet, dass** der zweite Wärmetauscher (13) an mindestens einer Seitenwand (5,6) des Spülbehälters angeordnet ist.

6. Geschirrspülmaschine (1) nach Anspruch 5, **dadurch gekennzeichnet, dass** bei Befüllung des ersten Wärmetauschers (12) und des zweiten Wärmetauschers (13) sich eine Kondensationfläche an der Seitenwand (5) und an der Seitenwand (6) des Behandlungsraums (4) bildet

7. Geschirrspülmaschine (1) nach einem der Ansprüche 4 bis 6, **dadurch gekennzeichnet, dass** mindestens eine Kondensationsfläche des zweiten Wärmetauschers (13) an einer Seitenwand des Strömungskanals (9) angeordnet ist.

8. Geschirrspülmaschine (1) nach einem der Ansprüche 1 bis 7, **dadurch gekennzeichnet, dass** in dem Strömungskanal (9) eine Ablaufvorrichtung für das Kondensat angeordnet ist.

9. Geschirrspülmaschine (1) nach einem der Ansprüche 1 bis 8, **dadurch gekennzeichnet, dass** in dem Strömungskanal (9) eine Heizung (11) angeordnet ist.

10. Geschirrspülmaschine (1) nach einem der Ansprüche 1 bis 9, **dadurch gekennzeichnet, dass** in dem Strömungskanal (9) ein Gebläse (10) angeordnet ist.

11. Geschirrspülmaschine (1) nach einem der Ansprüche 1 bis 10, **dadurch gekennzeichnet, dass** der Behandlungsraum (4) eine Einlassöffnung (8) und eine Auslassöffnung (8') aufweist, die durch den Strömungskanal (9) miteinander verbunden sind.

## Claims

1. Dishwasher (1) with a rinsing container (2) at which a first heat exchanger with a condensation surface, which serves for drying moist air in a treatment space (4), is arranged at least one side wall (5, 6), **characterised in that** a flow channel (9) for the throughflow of moist air is associated with the first heat exchanger (12), wherein the flow channel (9) is constructed as an integral component of the heat exchanger (12) and this is arranged at the side wall (5) of the rinsing container (2).

2. Dishwasher (1) according to claim 1, **characterised in that** at least one side wall (12') of the flow channel (9) is constructed as a side wall of the first heat exchanger.

3. Dishwasher (1) according to one of claims 1 or 2, **characterised in that** the first heat exchanger (12) is constructed as a latent heat store.

4. Dishwasher (1) according to any one of claims 1 to 3, **characterised in that** a second heat exchanger (13) is associated with the dishwasher (1).

5. Dishwasher (1) according to claim 4, **characterised in that** the second heat exchanger (13) is arranged at at least one side wall (5, 6) of the rinsing container.

6. Dishwasher (1) according to claim 5, **characterised in that** in the case of filling of the first heat exchanger (12) and the second heat exchanger (13) a condensation surface forms at the side wall (5) and at the side wall (6) of the treatment space (4).

7. Dishwasher (1) according to any one of claims 4 to 6, **characterised in that** at least one condensation surface of the second heat exchanger (13) is arranged at a side wall of the flow channel (9).

8. Dishwasher (1) according to any one of claims 1 to 7, **characterised in that** a discharge device for the condensate is arrange in the flow channel (9).

9. Dishwasher (1) according to any one of claims 1 to 8, **characterised in that** a heater (11) is arranged in the flow channel (9).

10. Dishwasher (1) according to any one of claims 1 to 9, **characterised in that** a fan (10) is arranged in the flow channel (9).

11. Dishwasher (1) according to any one of claims 1 to 10, **characterised in that** the treatment space (4) has an inlet opening (8) and an outlet opening (8') which are connected together by the flow channel (9).

## Revendications

1. Lave-vaisselle (1) comprenant un réservoir de lavage (2), sur lequel un premier échangeur de chaleur avec une surface de condensation est disposé sur au moins une paroi latérale (5, 6), lequel échangeur sert au séchage de l'air humide dans un espace de traitement (4), **caractérisé en ce qu'**un canal d'écoulement (9) pour la traversée d'air humide est attribué au premier échangeur de chaleur (12), le canal d'écoulement (9) étant conçu comme élément intégré de l'échangeur de chaleur (12) et celui-ci étant disposé sur la paroi latérale (5) du réservoir de lavage (2).

2. Lave-vaisselle (1) selon la revendication 1, **caractérisé en ce qu'**au moins une paroi latérale (12') du canal d'écoulement (9) est conçue comme une paroi latérale du premier échangeur de chaleur.

3. Lave-vaisselle (1) selon l'une des revendications 1 ou 2, **caractérisé en ce que** le premier échangeur de chaleur (12) est conçu comme un accumulateur de chaleur latente.

4. Lave-vaisselle (1) selon l'une des revendications 1 à 3, **caractérisé en ce qu'**un second échangeur de chaleur (13) est attribué au lave-vaisselle (1).

5. Lave-vaisselle (1) selon la revendication 4, **caractérisé en ce que** le second échangeur de chaleur (13) est disposé sur au moins une paroi latérale (5, 6) du réservoir de lavage.

6. Lave-vaisselle (1) selon la revendication 5, **caractérisé en ce que**, lors du remplissage du premier échangeur de chaleur (12) et du second échangeur de chaleur (13), il se forme une surface de condensation sur la paroi latérale (5) et sur la paroi latérale (6) de l'espace de traitement (4).

7. Lave-vaisselle (1) selon l'une des revendications 4 à 6, **caractérisé en ce qu'**au moins une surface de condensation du second échangeur de chaleur (13) est disposée sur une paroi latérale du canal d'écoulement (9).

8. Lave-vaisselle (1) selon l'une des revendications 1 à 7, **caractérisé en ce qu'**un dispositif d'écoulement pour le condensat est disposé dans le canal d'écoulement (9).

9. Lave-vaisselle (1) selon l'une des revendications 1 à 8, **caractérisé en ce qu'**un chauffage (11) est disposé dans le canal d'écoulement (9).

10. Lave-vaisselle (1) selon l'une des revendications 1 à 9, **caractérisé en ce qu'**une soufflerie (10) est disposée dans le canal d'écoulement (9).

11. Lave-vaisselle (1) selon l'une des revendications 1 à 10, **caractérisé en ce que** l'espace de traitement (4) présente une ouverture d'entrée (8) et une ouverture de sortie (8'), qui sont reliées l'une à l'autre par le canal d'écoulement (9).
